# EUROPEAN PATENT SPECIFICATION

(11) **EP 3 380 815 B1**
(45) Date of publication and mention of the grant of the patent: **03.03.2021**
(21) Application number: 16808733.6
(22) Date of filing: 23.11.2016
(51) Int. Cl.: G01D 21/02, G01D 5/20, G01L 9/00

(54) **MULTI-MODE SENSOR**
MULTIMODALER SENSOR
CAPTEUR MULTIMODE

(30) Priority: 23.11.2015 GB 201520655
(43) Date of publication of application: 03.10.2018
(73) Proprietor: Oxford University Innovation Limited, Oxford, Oxfordshire OX2 0JB (GB)
(72) Inventor: CHANA, Kamaljit Singh, Oxford Oxfordshire Ox2 0ES (GB)
(74) Representative: J A Kemp LLP
(86) International application number: PCT/GB2016/000208
(87) International publication number: WO 2017/089738

(56) References cited:
- EP-A1- 2 615 410
- DE-A1- 4 327 712
- JP-A- H0 791 948
- US-A1- 2002 130 651
- US-B1- 6 707 540

## Description

The invention relates to a sensor capable of simultaneously performing different modes of sensing, including in particular a mode based on inductance and at least one further mode. The invention is particularly applicable to sensing in turbo-machine assemblies, more particularly to proximity sensing in combination with a further mode of sensing such as pressure sensing.

Sensors which comprise a coil whose inductance changes as a function of the proximity of a target object are well known. These sensors may be referred to as inductive sensors or eddy current sensors. When a metallic object is brought close to the coil, significant eddy currents are generated in the object and the electrical response of a circuit comprising the coil changes (due to the change in inductance of the coil resulting from the eddy currents). Detection of this change in response can be used to detect the presence and/or proximity of the object. Inductive or eddy current sensors can therefore be used as proximity sensors.

Proximity sensors are often used in high temperature and/or pressure environments, for example in turbo-machine assemblies and other machines having high energy rotating components. Proximity sensors are useful in such applications for performance measurement, condition monitoring or development related analyses. As a particular example proximity sensors are used for detecting the passage of blades past a sensor mounted in a surrounding casing in a turbo-machine assembly, for example to measure variations in the clearance between blade tips and the surrounding casing or variations in the shapes of, or spacings between tips of, individual blades. The assembly may be part of a jet engine for an aircraft for example.

In addition to measuring a physical quantity using an inductive or eddy current sensor, it may be desired to measure one or more physical quantities which cannot optimally be derived using an inductive or eddy current sensor. However, particularly in high energy environments of the type found for example in turbo-machine assemblies, space is commonly restricted and it is desirable to keep mechanical disruption to a minimum to avoid compromising the structural integrity of components that need to operate reliably under extreme conditions. Introducing multiple sensors is therefore difficult because they tend to take up more space than single sensors and additional mechanical modifications are required to house the multiple sensors and to provide the necessary data and power input and output. Furthermore, modifications required to increase the number of sensors tends to increase weight, which is also undesirable, particularly in applications such as jet aircraft engines.

US 2002/130651 A1 discloses a sensor enabling simultaneous or sequential eddy current and optical reflectance measurements of conducting film by providing an eddy current inspection coil and a first and a second optical fiber extending axially through the coil.

US 6 707 540 B1 discloses a chemical mechanical polishing (CMP) system for polishing a sample with a polishing agent and monitoring the sample. The CMP system includes a polishing table, a sample carrier arranged to hold the sample over the polishing table, and an eddy probe. The polishing table and sample carrier are arranged to receive a polishing agent between the sample and the polishing table and to polish the sample by moving the polishing table and the sample carrier relative to each other. The eddy probe is arranged to be operable to obtain a measurement of the sample while the sample is being polished. The CMP system further includes an optical measurement device arranged to be operable to obtain a measurement of the sample while the sample is being polished.

DE 43 27 712 A1 discloses a sensor arrangement comprising a combination of at least one eddy-current sensor having at least one position sensor (displacement measuring sensor). The depth of penetration of the eddy currents generated by the eddy-current sensor corresponds at least to twice the thickness of the surface layer, and the position sensor serves to determine the distance of the sensor arrangement from the target surface. The measurement signals of the eddy-current sensor and of the position sensor are evaluated on the basis of a hypothetical depth of penetration of the eddy currents which is to be determined as a function of the frequency of the eddy currents and of the conductivity and the permeability of the basic material of the target.

JP H07 91948 A discloses a non-contact type film thickness measuring apparatus comprising an eddy current sensor probe and an optical type sensor probe both housed in a probe case and a signal processing section which determines a distance between a base body and a film based on outputs from the probes.

EP 2 615 410 A1 discloses a system that includes a turbomachine blade monitoring system having an eddy current proximity probe assembly. The eddy current proximity probe assembly includes an eddy current proximity probe having a probe tip and a probe tip shroud disposed about the probe tip, wherein the probe tip shroud comprises a non-metallic material. The eddy current proximity probe is configured to provide a signal indicative of a presence of a turbomachine blade, wherein the eddy current proximity probe assembly is configured to be disposed within a turbomachine casing.

It is an object of the invention to at least partly overcome one of more of the problems mentioned above.

The invention is defined by a multi-mode sensor according to claim 1.

Thus, an arrangement is provided in which a single sensor structure is able to perform a mode of sensing using electromagnetic induction and a mode of sensing which goes beyond what is possible using electromagnetic induction, without taking up any additional space, or requiring additional mechanical modifications to the apparatus being monitored, relative to what would be needed for providing the inductive sensing mode on its own.

The non-inductive sensor module is configured to perform an optical measurement. Apparatus for performing optical measurements can be implemented particularly effectively in the region that is radially inside of the coil without disrupting the operation of the inductive sensor module. It is relatively routine to provide optical components in non-metallic form.

In an embodiment the sensor is configured to operate at high temperatures, for example at 800 °C or above. A non-inductive sensor configured to perform an optical measurement can be configured to measure pressure at such high temperatures.

In an embodiment, the sensor is used in a turbo-machine assembly comprising a shaft or disc configured to rotate and wherein the sensor is configured to measure the first and second physical quantities in a region adjacent to a surface of the shaft or disc during rotation of the shaft or disc.

In another embodiment, the sensor is implemented in a turbo-machine assembly comprising a casing and a fan or turbine including a plurality of blades mounted rotatably within the casing, wherein the sensor is configured to measure the first and second physical quantities in a region between a radially inner surface of the casing and the blades and/or between the radially inner surface of the casing and a radially outer surface of the fan or turbine in between the blades. In such an embodiment, the measurement of the first physical quantity may provide a measure of blade vibration for example. The measurement of the second physical quantity may provide a measure of performance parameters, for example compressor performance parameters, such as surge.

Embodiments of the invention will now be described, by way of example only, with reference to the accompanying drawings in which corresponding reference symbols indicate corresponding parts, and in which:
Figure 1 is a schematic perspective view of a coil of an inductive sensor module and a portion of a non-inductive sensor module positioned radially inward of a portion of the coil;
Figure 2 is a schematic side view of a multi-mode sensor mounted so as to detect passing of target objects;
Figure 3 is a schematic side view showing a portion of an example multi-mode sensor in further detail;
Figure 4 is a schematic top view of the sensor of Figure 3;
Figure 5 is a schematic axial view of a sensor deployed in a turbo-machine assembly;
Figure 6 is a schematic axial view of a sensor deployed in an alternative turbo-machine assembly.

According to the invention, a multi-mode sensor is provided which comprises an inductive sensor module and a non-inductive sensor module. The inductive sensor module is configured to measure a first physical quantity based on magnetic induction. The first physical quantity may be determined for example by measuring a change in the inductance of a coil of the inductive sensor module. The inductive sensor module may be referred to as an inductive sensor or as an eddy-current sensor. The first physical quantity may be any physical quantity which is measurable using magnetic induction. For example, the first physical quantity may be a physical quantity which leads to a change in the inductance of a coil of the inductive sensor module. The first physical quantity may for example comprise the proximity of a metallic target object. In this case, the inductive sensor module may be considered to be a proximity sensor.

As mentioned above in the introductory part of the description, situations may arise in which it is desirable to measure a physical quantity using magnetic induction and one or more further physical quantities which are not derivable easily (or at all) using magnetic induction. Using multiple sensors to achieve this can disadvantageously increase the amount of space required for the implementation, as well as cost and complexity. Furthermore, there may be a negative impact on the structural integrity of the apparatus being monitored. Embodiments of the present invention address these challenges by providing a multi-mode sensor in which the geometries of the modules comprising the sensor are configured in a particular way which allows a high degree of compactness and structural simplicity to be achieved without loss of functionality. Measurements of multiple physical quantities can be made at the same position (or at very close positions), thereby facilitating relating the multiple measurements to each other. This may be particularly important where measurements are made in dynamic machinery where components are moving relative to the multi-mode sensor.

According to the invention, the multi-mode sensor in particular comprises an inductive sensor module having a coil wound around a coil axis and a non-inductive sensor module which has at least a portion positioned radially inward of a portion of the coil. The inventors have recognised that the natural space provided by the hole along the axis of the coil can be exploited to house additional sensing apparatus, optionally operating independently of the coil, without increasing the overall size of the sensing apparatus.

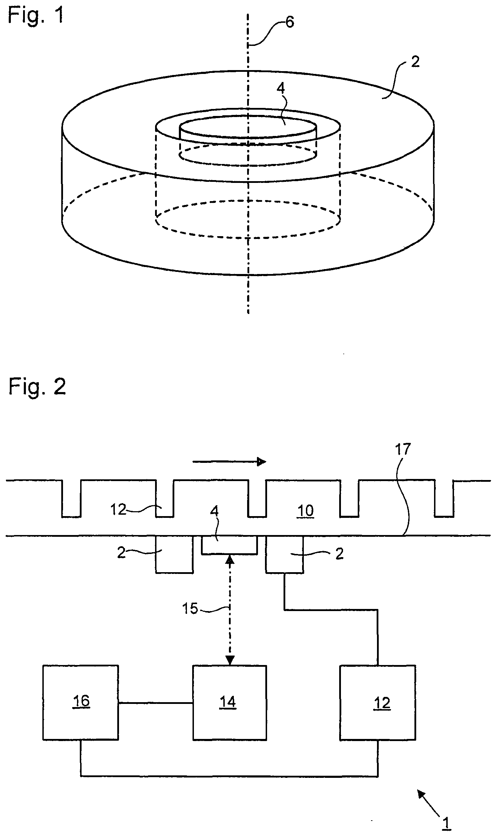

Figure 1 depicts an example configuration. Here, a coil 2 wound around a coil axis 6 of an inductive sensor module is shown. A portion 4 of a non-inductive sensor module is positioned radially inwardly of a portion of the coil 2 relative to the coil axis 6.

In an embodiment, as is the case in the example of Figure 1, the portion 4 of the non-inductive sensor module that is radially inward of the portion of the coil 2 overlaps in the axial direction (i.e. when viewed along a radial direction) with that portion of the coil 2.

In order that the portion 4 of the non-inductive sensor module does not interfere with a measurement of a first physical quantity by the inductive sensor module, the portion 4 of the non-inductive sensor module may be provided in a non-metallic form. The present inventors have recognised that a range of sensing modes can be implemented using non-inductive sensor modules which comprise only non-metallic elements in the region adjacent to where the sensing functionality is to be implemented (e.g. in the region of the coil 2 of the inductive sensing module). The inventors have recognised in particular that the space within the coil 2 itself is usable for mounting such elements.

In an embodiment, as is the case in the example of Figure 1, all of the portion of the non-inductive sensor module that is radially inward of the portion of the coil 2 is non-metallic. In the case where the portion 4 of the non-inductive sensor that is radially inward of the portion of the coil 2 overlaps when viewed in a radial direction with the portion of the coil 2, in an embodiment all of the overlapping region of the portion 4 of the non-inductive sensor is non-metallic.

In an embodiment, the non-inductive sensing module is configured to measure a second physical quantity using a non-inductive sensing mode. The non-inductive sensing mode may comprise an optical measurement.

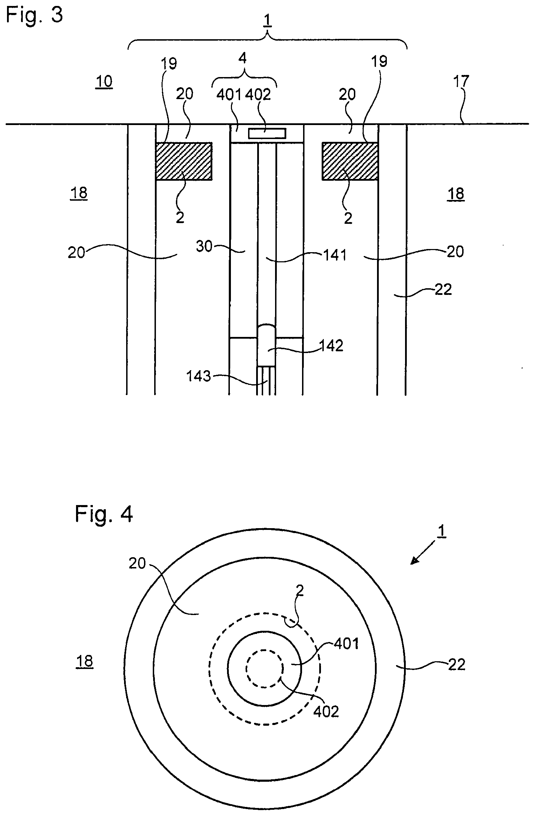

According to the invention, the non-inductive sensing module comprises a probe unit (corresponding to portion 4 in Figure 1 and described in further detail with reference to Figure 3 below) and an optical interrogation system (see Figure 3) configured to exchange electromagnetic radiation with the probe unit 4 in order to interrogate a state of the probe unit 4 that is dependent on the second physical quantity. It is possible to provide probe units 4 for this purpose, and apparatus for conveying an electromagnetic radiation beam to and from the probe units 4, using non-metallic elements (entirely or predominantly). According to the invention the second physical quantity comprises pressure, the probe unit 4 is configured to undergo a deformation and/or displacement that is a predetermined function of the pressure. Measurement of the deformation and/or displacement of the probe unit 4 can be used to obtain the pressure, optionally by reference to calibration data. Embodiments of the sensor are configured to operate in high temperature environments, for example at 800° and above. The above-described approach of using an optical measurement to measure pressure is suitable for use at such high temperatures.

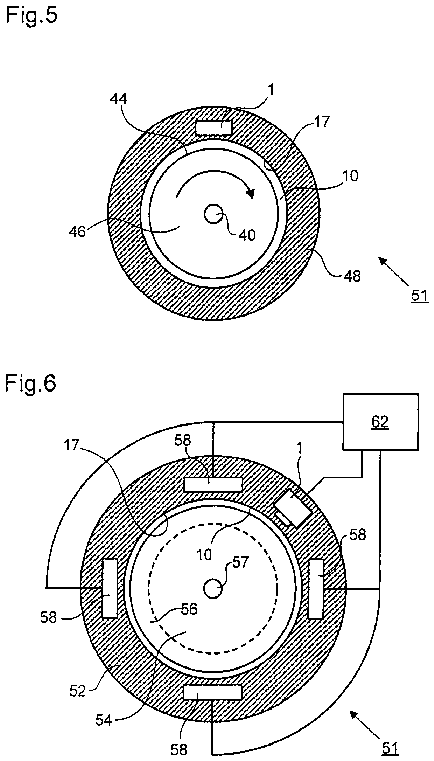

Figure 2 is a schematic side view showing how a multi-mode sensor 1 according to an embodiment may be installed within an apparatus to be monitored. The coil 2 and portion 4 of the non-inductive sensor module are mounted adjacent to an interface 17 between a component of the apparatus and a series of target objects 12 which are moving relative to the interface 17. As described in further detail below with reference to Figure 6, for example, the interface 17 may comprise an inner surface of a casing of a turbo-machine assembly, and the target objects 12 may comprise blades of a fan or turbine. In such an arrangement, the multi-mode sensor I may be configured to detect passing of the target objects 12 in front of the sensor by acting as a proximity sensor, using the inductive sensing module. In such an embodiment the first physical quantity comprises a measure of the amount of target object material within a sensing range of the sensor 1. The measurement of the first physical quantity may be used to detect the shapes of individual target objects or clearances between target objects 17 and the interface 17 for example. At the same time, the multi-mode sensor 1 is configured to measure a second physical quantity in the region 10 in between the interface 17 and the target objects 12, using the non-inductive sensor module. The second physical quantity comprises pressure.

In an embodiment, as shown in the example of Figure 2, the coil 2 may be attached to an inductance measuring module 12. The inductance measuring module 12 comprises electronics and/or data processing hardware/software configured to detect changes in the inductance of the coil 2. The detected changes can be used to determine the first physical quantity. An optical interrogation system 14 is provided for exchanging electromagnetic radiation 15 with the portion 4 of the non-inductive sensor module positioned within the coil 2, which in this embodiment may be referred to as a probe unit 4. A control system 16 may be provided for controlling operation of the optical interrogation system 14 and/or inductance measuring module 12, as well as for receiving data generated by the optical interrogation system 14 and inductance measuring module 12 and outputting this to a user.

Figures 3 and 4 show an example configuration for a portion of a multi-mode sensor 1 according to an embodiment. In this embodiment the multi-mode sensor 1 is mounted into a component 18 of an apparatus to be monitored such that it is flush or nearly flush with an interface 17. In other embodiments the sensor 1 may be recessed back from the interface 17 and/or embedded within the component 18 and not exposed directly to the region above the interface 17. In the example shown the sensor 1 comprises an integral housing 20 formed from a non-metallic material. The integral housing 20 comprises an annular recess 19 for housing the coil 2. The housing 20 also comprises conduits (not shown) allowing electrical connections to be made to the coil 2 for driving current through the coil in order to carry out measurements based on magnetic induction. An axial insert 30 is provided which defines a central lumen 141 through which the electromagnetic radiation may be directed on to the probe unit 4 and received from the probe unit 4 after interaction with (e.g. reflection from portions of) the probe unit 4. In this particular embodiment, a lens 142 connected to an optical fibre 143 is provided for conducting electromagnetic radiation from an optical interrogation system 14 (not shown in Figure 4) to the probe unit 4 via the lumen 141 and for receiving the electromagnetic radiation from the probe unit 4 via the lumen 141. The optical fibre 143 guides the electromagnetic radiation back to the optical interrogation system 14 for analysis. In the particular examples shown, the probe unit 4 comprises a substrate 401 and an insert or cavity 402 formed within the substrate 401. The insert or cavity 402 may be empty of solid material or may be filled with a solid material that is different (e.g. in structure and/or composition) from the material forming the rest of the substrate 401 (e.g. resulting in a difference in refractive index). Interfaces between the material of the substrate 401 and the insert or cavity 402 will cause reflection of incident electromagnetic radiation. The probe unit 4 in this embodiment is configured to measure pressure in the region 10 above the probe unit 4. Pressure in the region 10 will cause a deformation of the probe unit 4 that is characteristic of the pressure. The deformation will change the way electromagnetic radiation incident on the probe unit 4 via the lumen 141 interferes with itself after reflections from interfaces between the substrate 401 and the insert or cavity 402. In an embodiment, the depth of the insert or cavity 402 in a direction parallel to the incident electromagnetic radiation (i.e. the vertical direction in the orientation shown in Figure 3) is changed (reduced) by the pressure. Optical measurements of interference phenomena of this nature are well known in the art and the skilled person would be aware of the various ways of putting such functionality into effect.

The sensor 1 may be mounted directly within a recess of the apparatus 18 or may be at least partially encapsulated within a protective structure 22, as shown in the example of Figures 3 and 4. In the particular embodiment shown the protective structure 22 is provided as an open ended cylinder.

In an embodiment, the sensor 1 is provided within a turbo-machine assembly 51. Examples are shown schematically in Figures 5 and 6. The turbo-machine assembly 51 may comprise, for example, a fan assembly, a turbine assembly, a compressor assembly or an assembly comprising fan, turbine and/or compressor and/or one or more elements configured to operate selectively as a fan or as a turbine or as a compressor.

In an example such as that shown in Figure 5, the sensor 1 may be provided in a turbo-machine assembly 51 comprising a shaft or disc 46 configured to rotate about an axis 40. In embodiments of this type, the sensor 1 may be configured to measure the first and second physical quantities in a region 10 adjacent to a surface 17 of the shaft or disc 46 during rotation of the shaft or disc 46. In an embodiment, the first physical quantity comprises a clearance between the shaft or disc 46 and an adjacent component 48 (e.g. a bearing).

In an example such as that shown in Figure 6, the sensor 1 may be provided in a turbo-machine assembly 51 which comprises a casing 52 and a fan or turbine 54 mounted in the casing 52. The fan or turbine 54 is mounted so is to be rotatable about an axis 57. The fan or turbine 54 comprises a plurality of blades 56 (not shown individually) that extend radially outwards relative to the axis 57. In such an embodiment, the sensor 1 may be configured to measure the first and second physical quantities in a region between the blades or a radially outer portion of the fan or turbine in between the blades and a radially inner surface (17) of the casing (52)

The first physical quantity may comprise one or more of the following: a clearance between one or more of the blades and the radially inner surface 17 of the casing 52, a shape of one or more of the blades, relative positions of tips of two or more of the blades (e.g. circumferential positions, which may change due to distortion of the blades). The second physical quantity may comprise a pressure in a region 10 between a radially inner surface 17 of the casing 52 and the blades 56 and/or between the radially inner surface 17 of the casing 52 and a radially outer surface of the fan or turbine in between the blades.

It may be desirable to minimise the size of the clearance between the blades 56 and casing 52 in order to favour high operating efficiency while avoiding excessive contact between the blades 56 and the casing 52.

In an embodiment, a controller 62 is provided for controlling the size and/or shape of the casing 52 based on the clearance detected by the sensor 1. In an embodiment, the controller 62 is connected to control elements 58, which may be heating or cooling systems and/or mechanical actuators, for example. A control signal for controlling these elements is transmitted to them by the controller 62 based on the output from the sensor 1. In other embodiments, the controller 62 and/or control elements 58 may not be provided and the sensor 1 may be used instead for development or diagnostic purposes only. For example, in an embodiment, the assembly may be configured to initiate a shut-down procedure if the sensor 1 detects that the clearance (e.g. an average clearance) between the blades 56 and the casing 52 falls below a safety level threshold.

In the embodiments shown, the sensor 1 is configured to measure clearance at a single circumferential position. In other embodiments multiple sensors 1 may measure the clearance at a plurality of difference circumferential positions to enable the measurement of an anisotropic (i.e. as in azimuthally varying rather than axially symmetric) clearance. In the context of turbo-machine assembly for use in aircraft engines, such an anisotropic clearance may occur due to loading on the assemblies during flight for example.

The features defined in the claims may be used together in any combination.

## Claims

1. A multi-mode sensor (1), comprising:
an inductive sensor module configured to measure a first physical quantity based on magnetic induction, the inductive sensor module comprising a coil (2) wound around a coil axis (6); and
a non-inductive sensor module configured to measure a second physical quantity using a non-inductive sensing mode, wherein:
a portion of the non-inductive sensor module is radially inward of a portion of the coil (2) relative to the coil axis (6); wherein
the non-inductive sensor module comprises a probe unit (4) and an optical interrogation system (14) configured to exchange electromagnetic radiation with the probe unit (4) in order to interrogate a state of the probe unit (4) that is dependent on the second physical quantity; and
the second physical quantity comprises pressure and the probe unit (4) is configured to undergo a deformation or displacement in response to pressure adjacent to the sensor (1).

2. The sensor (1) of claim 1, wherein the portion of the non-inductive sensor that is radially inward of the portion of the coil (2) overlaps when viewed in a radial direction with the portion of the coil (2).

3. The sensor (1) of claim 1 or 2, wherein all of the portion of the non-inductive sensor module that is radially inward of the portion of the coil (2) is non-metallic.

4. The sensor (1) of any preceding claim, wherein:
the portion of the non-inductive sensor that is radially inward of the portion of the coil (2) overlaps when viewed in a radial direction with the portion of the coil (2); and
all of the overlapping region of the portion of the non-inductive sensor is non-metallic.

5. The sensor (1) of claim 1, wherein the portion of the non-inductive sensor module that is radially inward of the portion of the coil (2) comprises the probe unit.

6. The sensor (1) of any of the preceding claims, wherein the first physical quantity comprises an amount of target object material within a sensing range of the sensor (1).

7. A turbo-machine assembly (51) comprising:
a shaft or disc (46) configured to rotate; and
the sensor (1) of any preceding claim configured to measure the first and second physical quantities in a region (10) adjacent to a surface (17) of the shaft or disc (46) during rotation of the shaft or disc (46).

8. The assembly (51) of claim 7, wherein the first physical quantity comprises a clearance between a reference surface and the surface (17) of the shaft or disc (46).

9. A turbo-machine assembly (51), comprising:
a casing (52);
a fan or turbine (54) including a plurality of blades (56), mounted rotatably within the casing (52); and
the sensor (1) of any of claims 1-6 configured to measure the first and second physical quantities in a region between a radially inner surface of the casing (52) and the blades (56) and/or between the radially inner surface of the casing (52) and a radially outer surface of the fan or turbine (54) in between the blades (56).

10. The assembly (51) of claim 9, wherein the sensor (1) is mounted into the radially inner surface of the casing (52).

11. The assembly (51) of claim 9 or 10, wherein the first physical quantity comprises one or more of the following: a clearance between one or more of the blades (56) and the radially inner surface of the casing (52), a shape of one or more of the blades (56), relative positions of tips of two or more of the blades (56) with respect to each other.

12. The assembly (51) of any of claims 9-11, wherein the second physical quantity comprises a pressure in the region between the radially inner surface of the casing (52) and the blades (56) and/or between the radially inner surface of the casing (52) and the radially outer surface of the fan or turbine (54) in between the blades (56).

## Patentansprüche

1. Multimodussensor (1), umfassend:
ein induktives Sensormodul, das konfiguriert ist, um eine erste physikalische Größe beruhend auf magnetischer Induktion zu messen, wobei das induktive Sensormodul eine Spule (2) umfasst, die um eine Spulenachse (6) gewickelt ist; und
ein nicht-induktives Sensormodul, das konfiguriert ist, um eine zweite physikalische Größe unter Verwendung eines nicht-induktiven Erfassungsmodus zu messen, wobei:
ein Abschnitt des nicht-induktiven Sensormoduls radial innerhalb eines Abschnitts der Spule (2) relativ zu der Spulenachse (6) liegt; wobei
das nicht-induktive Sensormodul eine Sondeneinheit (4) und ein optisches Abfragesystem (14) umfasst, das konfiguriert ist, um elektromagnetische Strahlung mit der Sondeneinheit (4) auszutauschen, um einen Zustand der Sondeneinheit (4) abzufragen, der von der zweiten physikalischen Größe abhängig ist; und
die zweite physikalische Größe Druck umfasst und die Sondeneinheit (4) konfiguriert ist, um in Reaktion auf Druck in der Nähe des Sensors (1) eine Verformung oder Verschiebung zu erfahren.

2. Sensor (1) nach Anspruch 1, wobei der Abschnitt des nicht-induktiven Sensors, der radial innerhalb des Abschnitts der Spule (2) liegt, bei Betrachtung in radialer Richtung mit dem Abschnitt der Spule (2) überlappt.

3. Sensor (1) nach Anspruch 1 oder 2, wobei der gesamte Abschnitt des nicht-induktiven Sensormoduls, der radial innerhalb des Abschnitts der Spule (2) liegt, nicht-metallisch ist.

4. Sensor (1) nach einem der vorstehenden Ansprüche, wobei:
der Abschnitt des nicht-induktiven Sensors, der radial innerhalb des Abschnitts der Spule (2) liegt, sich bei Betrachtung in radialer Richtung mit dem Abschnitt der Spule (2) überlappt; und
der gesamte überlappende Bereich des Abschnitts des nicht-induktiven Sensors nicht-metallisch ist.

5. Sensor (1) nach Anspruch 1, wobei der Abschnitt des nicht-induktiven Sensormoduls, der radial innerhalb des Abschnitts der Spule (2) liegt, die Sondeneinheit umfasst.

6. Sensor (1) nach einem der vorstehenden Ansprüche, wobei die erste physikalische Größe eine Menge an Zielobjektmaterial innerhalb eines Erfassungsbereichs des Sensors (1) umfasst.

7. Turbomaschinenanordnung (51), umfassend:
eine Welle oder Scheibe (46), die zum Drehen konfiguriert ist; und
den Sensor (1) nach einem der vorstehenden Ansprüche, der konfiguriert ist, um die erste und zweite physikalische Größe in einem Bereich (10) zu messen, der an eine Oberfläche (17) der Welle oder Scheibe (46) angrenzt, während sich die Welle oder Scheibe (46) dreht.

8. Anordnung (51) nach Anspruch 7, wobei die erste physikalische Größe einen Zwischenraum zwischen einer Referenzfläche und der Oberfläche (17) der Welle oder Scheibe (46) umfasst.

9. Turbomaschinenanordnung (51), umfassend:
ein Gehäuse (52);
ein Gebläse oder eine Turbine (54), umfassend eine Vielzahl von Schaufeln (56), die drehbar innerhalb des Gehäuses (52) angebracht sind; und
den Sensor (1) nach einem der Ansprüche 1-6, der konfiguriert ist, um die erste und zweite physikalische Größe in einem Bereich zwischen einer radial inneren Fläche des Gehäuses (52) und den Schaufeln (56) und/oder zwischen der radial inneren Fläche des Gehäuses (52) und einer radial äußeren Fläche des Gebläses oder der Turbine (54) zwischen den Schaufeln (56) zu messen.

10. Anordnung (51) nach Anspruch 9, wobei der Sensor (1) in die radial innere Fläche des Gehäuses (52) eingebaut ist.

11. Anordnung (51) nach Anspruch 9 oder 10, wobei die erste physikalische Größe einen oder mehrere der folgenden Punkte umfasst: einen Zwischenraum zwischen einer oder mehreren der Schaufeln (56) und der radial inneren Oberfläche des Gehäuses (52), eine Form einer oder mehrerer der Schaufeln (56), relative Positionen der Spitzen von zwei oder mehreren der Schaufeln (56) in Bezug zueinander.

12. Anordnung (51) nach einem der Ansprüche 9-11, wobei die zweite physikalische Größe einen Druck in dem Bereich zwischen der radial inneren Oberfläche des Gehäuses (52) und den Schaufeln (56) und/oder zwischen der radial inneren Oberfläche des Gehäuses (52) und der radial äußeren Oberfläche des Gebläses oder der Turbine (54) zwischen den Schaufeln (56) umfasst.

## Revendications

1. Capteur multimode (1), comprenant :
un module de capteur inductif configuré pour mesurer une première quantité physique basée sur l'induction magnétique, le module de capteur inductif comprenant une bobine (2) enroulée autour d'un axe de bobine (6) ; et
un module de capteur non inductif configuré pour mesurer une seconde quantité physique en utilisant un mode de détection non inductif, dans lequel :
une partie du module de capteur non inductif est radialement vers l'intérieur d'une partie de la bobine (2) par rapport à l'axe de la bobine (6) ; dans lequel
le module de capteur non inductif comprend une unité de sonde (4) et un système d'interrogation optique (14) configuré pour échanger un rayonnement électromagnétique avec l'unité de sonde (4) afin d'interroger un état de l'unité de sonde (4) qui dépend sur la seconde quantité physique ; et
la seconde quantité physique comprend la pression et l'unité de sonde (4) est configurée pour subir une déformation ou un déplacement en réponse à une pression adjacente au capteur (1).

2. Capteur (1) selon la revendication 1, dans lequel la partie du capteur non inductif qui est radialement vers l'intérieur de la partie de la bobine (2) chevauche, lorsqu'elle est vue dans une direction radiale, la partie de la bobine (2).

3. Capteur (1) selon la revendication 1 ou 2, dans lequel toute la partie du module de capteur non inductif qui est radialement vers l'intérieur de la partie de la bobine (2) est non métallique.

4. Capteur (1) selon l'une quelconque des revendications précédentes, dans lequel :
la partie du capteur non inductif qui est radialement vers l'intérieur de la partie de la bobine (2) chevauche, lorsqu'elle est vue dans une direction radiale, la partie de la bobine (2) ; et
toute la région de chevauchement de la partie du capteur non inductif est non métallique.

5. Capteur (1) selon la revendication 1, dans lequel la partie du module de capteur non inductif qui est radialement vers l'intérieur de la partie de la bobine (2) comprend l'unité de sonde.

6. Capteur (1) selon l'une quelconque des revendications précédentes, dans lequel la première quantité physique comprend une quantité de matériau objet cible dans une plage de détection du capteur (1).

7. Ensemble de turbomachine (51) comprenant :
un arbre ou disque (46) configuré pour tourner ; et
le capteur (1) selon l'une quelconque des revendications précédentes configuré pour mesurer les première et seconde quantités physiques dans une région (10) adjacente à une surface (17) de l'arbre ou du disque (46) pendant la rotation de l'arbre ou du disque (46).

8. Ensemble (51) selon la revendication 7, dans lequel la première quantité physique comprend un jeu entre une surface de référence et la surface (17) de l'arbre ou du disque (46).

9. Ensemble de turbomachine (51), comprenant :
un carter (52) ;
une soufflante ou une turbine (54) comprenant une pluralité d'aubes (56), montées de manière rotative à l'intérieur du carter (52) ; et
le capteur (1) selon l'une quelconque des revendications 1 à 6, configuré pour mesurer les première et seconde quantités physiques dans une région entre une surface radialement intérieure du carter (52) et les aubes (56) et / ou entre la surface radialement intérieure du carter (52) et une surface radialement extérieure de la soufflante ou de la turbine (54) entre les aubes (56).

10. Ensemble (51) selon la revendication 9, dans lequel le capteur (1) est monté dans la surface radialement intérieure du carter (52).

11. Ensemble (51) selon la revendication 9 ou 10, dans lequel la première quantité physique comprend un ou plusieurs des éléments suivants : un jeu entre une ou plusieurs des aubes (56) et la surface radialement intérieure du carter (52), une forme d'une ou plusieurs des aubes (56), des positions relatives des pointes de deux ou plusieurs des aubes (56) les unes par rapport aux autres.

12. Ensemble (51) selon l'une quelconque des revendications 9 à 11, dans lequel la seconde quantité physique comprend une pression dans la région entre la surface radialement intérieure du carter (52) et les aubes (56) et / ou entre la surface radialement intérieure du carter (52) et la surface radialement extérieure de la soufflante ou de la turbine (54) entre les aubes (56).
